# EUROPEAN PATENT APPLICATION

(11) **EP 4 846 897 A1**
(43) Date of publication of application: **02.12.2026**
(21) Application number: 26172824.0
(22) Date of filing: 16.04.2026
(51) Int. Cl.: A47J 31/54, A47J 31/46

(54) **LIQUID HEATING SYSTEM**

(30) Priority: 30.05.2025 NL 2040473
(71) Applicant: Bravilor Bonamat BV, 1704 RD Heerhugowaard (NL)
(72) Inventor: VERHOEVEN, Romanus Eduard, 1704 RD Heerhugowaard (NL); VERHOEVEN, Lorenzo Romanus, 1704 RD Heerhugowaard (NL); DE GRAAF, Pieter Arnoud, 1704 RD Heerhugowaard (NL)
(74) Representative: van Breda, Jacobus

(57) **Abstract**

Liquid heating system (1) comprising a heating unit (6) and a first liquid container (2), a pump (3) downstream connected to said first liquid container (2), and a flow control unit (5) fluidly connected to the first liquid container (2), wherein the first liquid container (2) comprises a second liquid container (4) placed inside the first liquid container (2), wherein said second liquid container (4) is downstream connected to the pump (3), and said second liquid container (4) comprises a heating unit (6) placed inside said second liquid container (4), and the flow control unit (5) is downstream connected to the second liquid container (4).

## Description

The present invention relates to a liquid heating system for a hot beverage machine, such as a coffee and/or espresso coffee machine. Such liquid heating system usually comprises a heating unit, a first liquid container, a liquid pump connected downstream to said first liquid container, and a flow control unit fluidly connected to the first liquid container.

NL2035621 discloses a liquid heating system comprising a single tank for storing heated liquid, a pump and piping for transporting liquid to and fro said tank, and further a flow-through heater that is fluidly connected with said tank, and at least one liquid outlet that is fluidly connected with said tank, and a switching unit for controlling the flow in a first circuit between said tank and the flow-through heater, and in a second circuit between said tank and said at least one liquid outlet wherein the first circuit is a closed liquid circulation circuit to direct the liquid from the single tank to the pump, and then from the pump to the flow-through heater, and from the flow-through heater back to the single tank.

Although the system of NL2035621 operates satisfactorily, there is room for improvement in the following aspects :
- The flow-through heater dissipates heat to the surrounding environment and, even with insulation material, this loss is very difficult to prevent;
- In order to heat the single tank and keep it at the desired temperature, interim heating must be done wherein the heated liquid, usually water, must always be (re)circulated through the circuit which heats up all the components of the heating system in the process, which then radiate and dissipate heat to the surrounding environment. Therefore, interim heating results in useless heat loss and should be done as little as possible;
- Due to the very low thermal mass of the flow-through heater and the often varying flow rate (the coffee making process has varying resistance during brewing), keeping the dosing temperature stable is a challenge;
- Before dosing, the entire circuit is still cold and it must first be brought up to the desired temperature which costs time and energy;
- The flow-through heater is at risk of limescale build-up;
- It is not possible to heat the single tank during dosing.

It is an object of the current invention to address the above shortcomings of the prior art and particularly to provide a liquid heating system that is more energy-efficient, more compact in size, and featuring reduced waiting time before dosing. This and other objects which will become apparent from the following disclosure, are provided with a liquid heating system having the features of one or more of the appended claims.

According to the invention the first liquid container comprises a second liquid container placed inside the first liquid container, wherein said second liquid container is connected downstream to the pump, and said second liquid container comprises a heating unit placed inside said second liquid container, and the flow control unit is connected downstream to the second liquid container.

By placing the heat source directly within the thermal envelope of the first container, the system eliminates heat losses to the environment, allowing for efficient heating of the water, without the need for circulation. This configuration thus offers several advantages: no heat is lost to the surrounding environment, the system can maintain the desired temperature without circulating water, the heat conduction between the second liquid container and the first liquid container is sufficient for heating, eliminating the need for circulation of the liquid, and the increased thermal mass of the heater inside the second liquid container leads to faster heating and more stable temperature delivery. Additionally, compared to the flow-through heater of NL2035621, the relatively large flow opening between the heat unit and the second liquid container reduces the risk of blockage or flow restriction due to limescale buildup. Last, but not least, the system takes up less space due to the elimination of the external flow-through heater and its piping.

Advantageously, the liquid heating system comprises a liquid circulation circuit, wherein a liquid flow is directed from the first container to the liquid pump, and from the liquid pump to the second liquid container and from the second liquid container to the flow control unit, and from the flow control unit to the first container. This feature allows for fast heating of the fluid in the first container by circulating the fluid and increases output capacity. It also improves the energy-efficiency, reduces maintenance needs, and improves equipment longevity. It also minimizes water loss through evaporation, prevents contamination, and offers better temperature control, leading to lower operational costs and a more reliable system.

To reduce heat-dissipation, the first liquid container may comprise heat insulating walls. Advantageously, the first liquid container is vacuum insulated, which not only provides an optimal heat insulation but also reduces the overall weight of the system in comparison to a double-walled insulation with air or foam, since a vacuum insulated wall is devoid of the extra weight of air or foam.

Suitably, the heating unit may be an electric heating unit comprising electrical connections. An electric heating unit provides a clean and quiet operation, and can be controlled precisely.

Suitably, the flow control unit comprises at least one liquid outlet wherein said flow control unit is provided downstream of the second liquid container for selecting that either the liquid received from the second liquid container is returned back to the first container, or that said liquid continues towards said at least one liquid outlet. The flow control unit is therefore arranged to direct the liquid flow from the second liquid container to the at least one liquid outlet according to the selected type beverage. When no beverage is being prepared or when too much liquid has been pumped from the second container, the flow control unit returns said liquid back to the first container.

Preferably, the flow control unit comprises a plurality of liquid outlets, each of said liquid outlets being arranged with a pressure and/or temperature setting of the liquid to be further processed to an end product corresponding to one selected from the group comprising espresso, fresh brew, instant coffee, steam, hot water.

The liquid circulation circuit may comprise a main liquid inlet provided between the first liquid container and the pump or between the pump and the second liquid container. Such main liquid inlet is used to replenish the liquid in the system.

Advantageously, the pump may be arranged to operate when the main liquid inlet is operative for replenishing liquid into the system. When the liquid pressure coming from the main liquid inlet is not high enough to pump the new liquid into the system, which is usually the case, the pump may be engaged to compensate for the low liquid pressure and, optionally, to maintain a desired pressure inside the second container. Filling the system is also possible without operating the liquid pump when the water pressure from the filling tap is high enough.

Suitably, the second liquid container may be arranged to be pressurized i.e. capable of being pressurized. This provides a stable liquid flow between the second liquid container and the flow control unit without any time lag that can be caused by waiting for the pump to start operation. When the pressure inside the second liquid container decreases, the pump is engaged to repressurize the second liquid container to the desired pressure.

For a superior durability, resistance to corrosion and bacterial growth, and ease of cleaning, the second liquid container comprises stainless steel and or titanium walls. Additionally, such walls are also environmentally friendly and recyclable.

In a first embodiment, the second liquid container may comprise a cylindrically shaped body. This allows for a better pressure distribution, structural strength, greater storage capacity and durability compared to other shapes, while also reducing the overall cost of materials and maintenance.

Advantageously, the second liquid container may comprise at least one liquid inlet fluidly connected to the pump and at least one liquid outlet fluidly connected to the flow control unit. The liquid inlet of the second liquid container is responsible for channeling liquid inside the second container, said liquid inlet of the second liquid container should not be confused with the main liquid inlet which is responsible for replenishing the liquid in the whole system. The fluid connection may be provided by any kind of fluid piping known to the skilled person.

More advantageously, the at least one liquid outlet extends inside the second liquid container to an end of the second liquid container distal to the at least one liquid inlet. The outlet pipe may extend to or near the end of the second liquid container distal to the liquid inlet of the second liquid container which enables the second liquid container to be totally filled up before the liquid reaches the distal end of the second liquid container and gets channeled out of the second liquid container. Additionally, this feature allows the second liquid container to be filled relatively fast, in comparison with a non-extending outlet pipe.

In a second embodiment, the second liquid container may comprise a U-shaped or a spiral-shaped body, wherein the liquid inlet may be fluidly connected to a first end of the U-shaped or a spiral-shaped body, and the liquid outlet may be fluidly connected to a second end of the U-shaped or a spiral-shaped body. In such a second embodiment, the second liquid container may be U-shaped or a spiral-shaped and cylindrical at the same time i.e. the body of the second liquid container may comprise a cylindrical shape that is bended in a U-shape or a spiral-shape.

For an increased thermal efficiency and for faster heating of the liquid contained in the second container, the heating unit may fit in the U-shaped or the spiral-shaped body of the second liquid container. Preferably the heating unit is U-shaped, matching the U-shape of the second liquid container.

The second liquid container, according to the first and/or to the second embodiment, may be detachable from the first liquid container to allow for maintenance and/or cleaning. For this purpose, the second liquid container preferably comprises external threads configured to match internal threads comprised in a wall of the first liquid container. This feature allows the second liquid container to be jointly screwed to a wall of the first liquid container. The threads create a mechanical connection between the first and the second liquid container, and suitably, a hydraulic seal between the first and the second liquid container, when the second liquid container is fully screwed into place.

The liquid heating system comprises a liquid counter provided in the liquid circulation circuit. This allows for better water management e.g. this liquid counter enables to record the exact amount of liquid that is pumped around, depending on the selected beverage type. An Americano (or nowadays in some circles referred to as a Canadiano) requires between 200-240 ml of water, while a single-shot espresso usually requires 30ml of water.

To measure temperature and pressure in different components of the liquid heating system, said liquid heating system may comprise temperature and pressure sensors provided in the liquid circulation circuit. The sensors may be provided in the components themselves, or in the piping fluidly connecting the components to each other.

The accompanying drawing, which is incorporated into and forms a part of the specification, illustrates one or more embodiments of the present invention and, together with the description, serves to explain the principles of the invention. The drawing is only for the purpose of illustrating one or more embodiments of the invention and is not to be construed as limiting the invention.

In the drawing:
- figure 1 shows schematically a Liquid heating system (1) according to the invention;
- figure 2 show an embodiment of a Liquid heating system (1) according to the invention;
- figure 3 shows a first embodiment of a second liquid container of the Liquid heating system (1) according to the invention in a tilted side view;
- figure 4 shows a second embodiment of a second liquid container of the Liquid heating system (1) according to the invention in multiple side views.

Whenever in the figure the same reference numerals are applied, these numerals refer to the same parts.

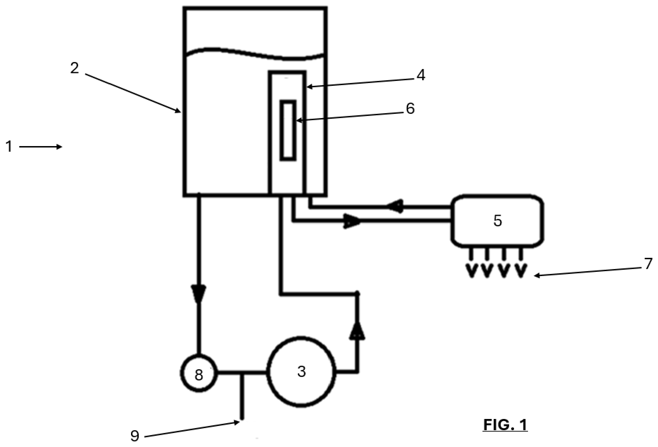

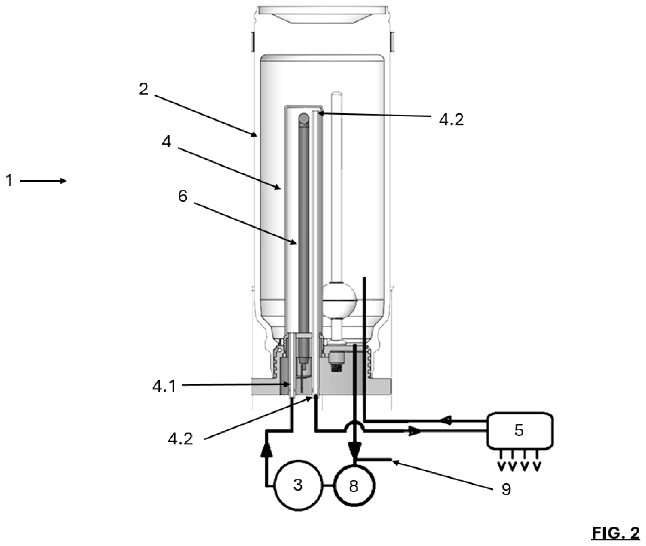

In detail, the liquid heating system 1 of the invention is shown in figures 1 and 2 comprising a first liquid container 2, a liquid pump 3 fluidly connected to said first liquid container 2, and a flow control unit 5 fluidly connected to the first liquid container 2 wherein the first liquid container 2 comprises a second liquid container 4 placed inside the first liquid container 2. The second liquid container 4 is fluidly connected to the pump 3 and to the flow control unit 5, and the second liquid container 4 comprises a heating unit 6 placed inside said second liquid container 4. The fluid connection between the components of the system 1 may be provided by any kind of piping (hoses) known to the skilled person.

Advantageously, as shown in Figure 2, the second liquid container 4 may comprise a liquid inlet 4.1 and a liquid outlet 4.2 for channeling liquid in and out of the second liquid container 4 respectively, wherein the liquid inlet 4.1 is fluidly connected to the pump 3 and wherein the liquid outlet 4.2 is fluidly connected to the flow control unit 5.

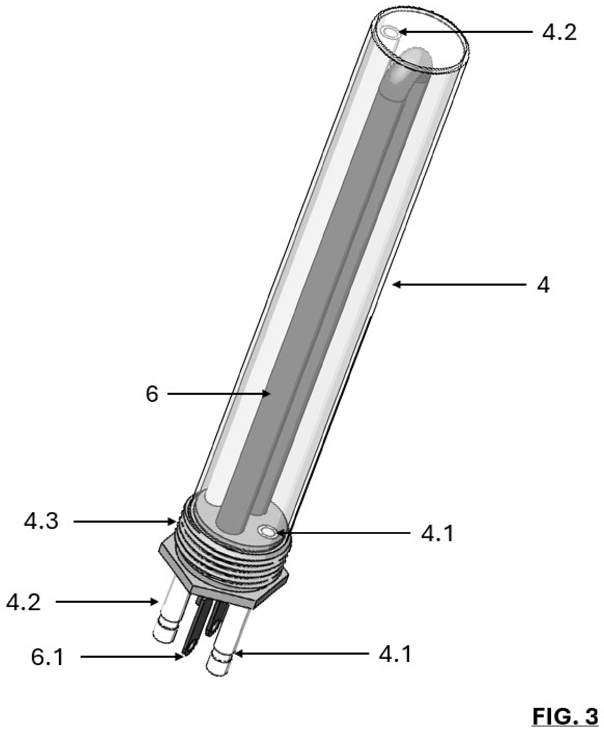

In a first embodiment of the second liquid container 4, shown in figure 3, said container 4 may comprise a cylindrical shape, wherein a pipe of the liquid outlet 4.2 may extend inside the second liquid container 4 up to and near to an end portion of the second liquid container 4 distal to the inlet 4.1 of said second liquid container 4. This feature allows the second liquid container 4 to be filled up faster while maintaining stable pressure inside the second liquid container 4.

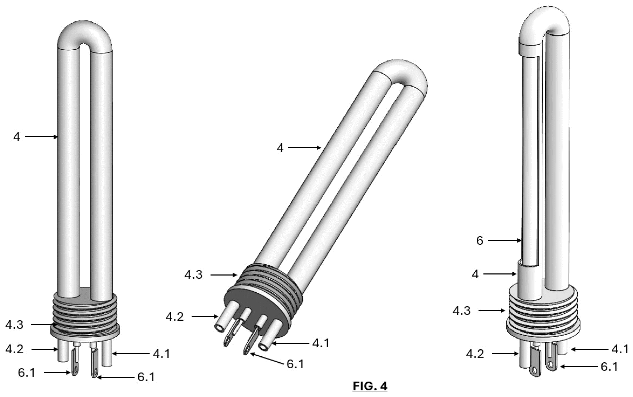

In a second embodiment, shown in figure 4, the second liquid container 4 may comprise a U-shaped or spiral shaped body wherein the liquid inlet 4.1 is fluidly connected, or integrated, with the first end of the U-shaped of the second liquid container 4, and wherein the liquid outlet 4.2 is fluidly connected, or integrated, with the second end of the U-shaped body of the second liquid container 4. Suitably, the second liquid container 4 may also comprise a spiral-shaped body (not shown) wherein the liquid inlet 4.1 is fluidly connected, or integrated, with the first end of the spiral-shaped body of the second liquid container 4, and wherein the liquid outlet 4.2 is fluidly connected, or integrated, with the second end of the spiral-shaped body of the second liquid container 4. This feature allows for a faster heating of the liquid inside the second liquid container 4, especially when the heating unit is provided with a U-shape or a spiral-shape, said shape matching the U-shape or the spiral-shape of the second liquid container 4.

The heat source in the system 1 is ultimately the heating unit 6, which is preferably an electric heating unit 6 with electrical connections 6.1. However, the second liquid container 4 may also be used as a heating source for the water in the first liquid container 2, regardless of whether the heating unit 6 is operating, when the water contained inside the second liquid container 4 has enough heat stored i.e. the water inside the second liquid container 4 has a higher temperature than the water stored inside the first liquid container 2.

Because the heat source (the heating unit 6 and/or the second liquid container 4) is placed in the thermal envelope of the first container 2, the heat losses are significantly minimalized in comparison with the prior art. The radiation of the heating unit 6 is now given off to the surrounding water of the first liquid container 2, and is no longer lost to the environment. Another very big advantage is the possibility of keeping the water in the first liquid container 2 at the desired temperature without having to circulate the water through the whole liquid circulation circuit of the liquid heating system 1. The heat conduction from the second liquid container 4 to the water in the first liquid container 2 is large enough to keep the water in the first liquid container 2 at the desired temperature when the heating unit 6 is switched on, without the need of circulation. By not circulating, the pump 3, the liquid counter 8, the flow control unit 5 and their piping remain unheated and do not absorb or radiate heat. This allows the liquid heating system 1 to be kept at the right temperature in a very energy-efficient manner.

Advantageously, the heat conduction between the second liquid container 4 and the first liquid container 2 makes it possible to heat the first liquid container 2 to a certain extent during brewing, something that is not possible with the system of the prior art such as known in NL2035621.

Another major advantage of this configuration is the greater thermal mass of the heat source. The heat energy in the water present in the second liquid container 4 can help bring the circuit up to the desired temperature more quickly prior to brewing, which can shorten the total dosing time. The increased thermal buffer/mass also ensures a more stable delivery temperature with fluctuating dosing rates.

The liquid heating system 1 may comprise a liquid circulation circuit wherein a liquid flow is directed from the first liquid container 2 to the pump 3, and from the pump 3 to the second liquid container 4 and from the second liquid container 2 to the flow control unit 5, and from the flow control unit 5 to the first container 2. To save energy, the liquid circulation circuit of the system 1 is usually held in a closed position by hermetically connecting the components of the system 1 via fluid pipes. Optionally, the circulation circuit may be occasionally opened for replenishing the liquid via the main liquid inlet 9, or for bleeding the circuit via a maintenance bleeding outlet (not shown).

The second liquid container 4 may be detachable from the first liquid container 2 to allow for maintenance and/or cleaning. For this purpose, the second liquid container 4 may comprise external threads 4.3 configured to match internal threads comprised in a wall of the first liquid container 2. This feature allows the second liquid container 4 to be jointly screwed to a wall of the first liquid container 2 while remaining detachable from said first liquid container 2 to allow for maintenance and/or cleaning. The threads 4.3 create a mechanical connection between the first 2 and the second 4 liquid container, and suitably, a hydraulic seal between the first 2 and the second 4 liquid container, when the second liquid container 4 is fully screwed into place.

Advantageously, the relatively large flow opening between the heating unit 6 and the second liquid container 4 makes the system less sensitive to limescale deposits.

More advantageously, the entire system takes up less space because the external flow-through heater and its piping are no longer necessary and the heat source is now placed inside the first liquid container 2.

The energy efficiency is improved by minimizing heat losses when the first liquid container 2 is embodied comprising heat insulating walls. Preferably, the first liquid container 2 is vacuum insulated i.e. the walls of the second liquid container 2 are surrounded by a vacuum space, which offers optimal heat insulation while reducing the overall weight of the system 1.

Figures 1 and 2 also show the flow control unit 5 comprising at least one liquid outlet 7 wherein said flow control unit 5 is provided downstream of the second liquid container 4 for selecting that either the liquid received from the second liquid container 4 is returned back to the first container 2, or that said liquid continues towards said at least one liquid outlet 7. Suitably, the flow control unit 5 comprises a plurality of liquid outlets 7, each of said liquid outlets being arranged with a pressure and/or temperature setting of the liquid to be further processed to an end product corresponding to one selected from the group comprising espresso, fresh brew, instant coffee, steam, hot water. The flow control unit 5 and/or the at least one liquid outlet 7 may be controlled by a programmable micro-computer (not shown) preloaded with instructions on the amount of water, levels of temperature and pressure, among other instructions, corresponding to each type of beverage.

The pump 3 may be arranged to operate when the main liquid inlet 9 is operative for replenishing liquid into the first liquid container 2. By running the pump 3 during replenishment, the cold water from the main liquid inlet 9 will be pumped into the second liquid container 4 and immediately heated by the heating unit 6 and/or the already heated second liquid container 4. The flow control unit 5 will then return the freshly heated liquid into the first liquid container 2 and the first liquid container 2 will then be refilled with hot water. Without this feature, the cold water coming from the main liquid inlet 9 might not have enough pressure to enter the pressurized second liquid container 4.

Optionally, the liquid heating system 1 may comprise a liquid counter 8 provided in the liquid circulation circuit. Such counter works in combination with the flow control unit 5 to ensure optimal liquid levels in all components of the system 1. The main function liquid counter 8 is the ability to accurately dose desired volumes. The power of the heating unit 6 is also regulated based on the flow rate (and temperature). Finally, the flow rate during circulation can be used to deduce the extent to which the system 1 is hindered by limescale, and a request for descaling can be activated.

Embodiments of the present invention can include every combination of features that are disclosed herein independently from each other. Although the invention has been discussed in the foregoing with reference to an exemplary embodiment of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

## Claims

1. Liquid heating system (1) comprising a heating unit (6) and a first liquid container (2), a pump (3) connected downstream to said first liquid container (2), and a flow control unit (5) fluidly connected to the first liquid container (2), **characterized in that** the first liquid container (2) comprises a second liquid container (4) placed inside the first liquid container (2), wherein said second liquid container (4) is connected downstream to the pump (3), and said second liquid container (4) comprises a heating unit (6) placed inside said second liquid container (4), and the flow control unit (5) is connected downstream to the second liquid container (4).

2. Liquid heating system (1) according to claim 1, **characterized in that** the liquid heating system (1) comprises a liquid circulation circuit wherein a liquid flow is directed from the first liquid container (2) to the pump (3), and from the pump (3) to the second liquid container (4) and from the second liquid container (4) to the flow control unit (5), and from the flow control unit (5) back to the first liquid container (2).

3. Liquid heating system (1) according to claim 1 or 2, **characterized in that** the first liquid container (2) comprises heat insulating walls.

4. Liquid heating system (1) according to any one of the preceding claims, **characterized in that** the first liquid container (2) is vacuum insulated.

5. Liquid heating system (1) according to any one of the preceding claims, **characterized in that** the heating unit (6) is an electric heating unit comprising electrical connections (6.1).

6. Liquid heating system (1) according to any one of the preceding claims, **characterized in that** the flow control unit (5) comprises at least one liquid outlet (7) wherein said flow control unit (5) is provided downstream of the second liquid container (4) for selecting that either the liquid received from the second liquid container (4) is returned back to the first liquid container (2), or that said liquid continues towards said at least one liquid outlet (7).

7. Liquid heating system (1) according to any one of the preceding claims, **characterized in that** the flow control unit (5) comprises a plurality of liquid outlets (7), each of said liquid outlets being arranged with a pressure and/or flow and/or temperature setting of the liquid to be further processed to an end product corresponding to one selected from the group comprising espresso, fresh brew, instant coffee, steam, hot water.

8. Liquid heating system (1) according to any one of the preceding claims, **characterized in that** the liquid circulation circuit comprises a main liquid inlet (9) provided between the first liquid container (2) and the pump (3) or between the pump (3) and the second liquid container (4).

9. Liquid heating system (1) according to claim 8, **characterized in that** the pump (3) is arranged to operate when the main liquid inlet (9) is operative for replenishing liquid into the liquid heating system (1).

10. Liquid heating system (1) according to any one of the preceding claims, **characterized in that** the second liquid container (4) is arranged to be pressurized.

11. Liquid heating system (1) according to any one of the preceding claims, **characterized in that** the second liquid container (4) comprises at least one liquid inlet (4.1) fluidly connected to the pump (3) and at least one liquid outlet (4.2) fluidly connected to the flow control unit (5).

12. Liquid heating system (1) according to claim 11, **characterized in that** the at least one liquid outlet (4.2) extends inside the second liquid container (4) to an end of the second liquid container (4) distal to the at least one liquid inlet (4.1).

13. Liquid heating system (1) according to claim 12, **characterized in that** the liquid inlet (4.1) is fluidly connected to a first end of a U-shaped or a spiral-shaped body, and the liquid outlet (4.2) is fluidly connected to a second end of the U-shaped or a spiral-shaped body.

14. Liquid heating system (1) according to claim 12 or 13, **characterized in that** the heating unit (6) is fitted inside the U-shaped or a spiral-shaped body of the second liquid container (4).

15. Liquid heating system (1) according to any one of the preceding claims, **characterized in that** the liquid heating system comprises temperature and pressure sensors provided in the liquid circulation circuit.
